# NEW EUROPEAN PATENT SPECIFICATION

(11) **EP 2 154 007 B2**
(45) Date of publication and mention of the opposition decision: **16.01.2019**
(45) Mention of the grant of the patent: 07.10.2015
(21) Application number: 08752747.9
(22) Date of filing: 14.05.2008
(51) Int. Cl.: B60C 11/03, B60C 11/00, B60C 3/06

(54) **PNEUMATIC TIRE**
LUFTREIFEN
PNEU

(30) Priority: 16.05.2007 JP 2007130227
(43) Date of publication of application: 17.02.2010
(73) Proprietor: Bridgestone Corporation, Tokyo 104-8340 (JP)
(72) Inventor: NAGAI, Shu, Tokyo 187-8531 (JP)
(74) Representative: Oxley, Robin John George
(86) International application number: PCT/JP2008/058876
(87) International publication number: WO 2008/143104

(56) References cited:
- EP-A2- 1 016 555
- EP-A2- 1 236 587
- EP-A2- 1 236 587
- JP-A- 02 162 104
- JP-A- 05 330 312
- JP-A- 11 059 118
- JP-A- 49 067 305
- JP-A- S61 229 602
- JP-A- 2000 198 319
- JP-A- 2003 326 917
- JP-A- 2008 018 912
- US-A- 6 095 217
- THOMAS D. GILLESPIE: 'FUNDAMENTALS OF VEHICLE DYNAMICS' INTERNET CITATION 01 January 1992, XP055293600
- GENT A.N.: 'ENGINEERING WITH RUBBER - HOW TO DESIGN RUBBER COMPONENTS' INTERNET CITATION 01 January 2001, XP055293601

## Description

### TECHNICAL FIELD

The present invention relates to a pneumatic tire in which an inner side and an outer side are designated for installation in a vehicle.

### BACKGROUND ART

With the recent increase in the demand for improvement in pneumatic tire performances, there is a growing need for a technique for balancing competing performances such as steering stability, comfortability (ride quality and quietness), and wear resistance. As one of such techniques, a pneumatic tire having asymmetry with respect to the tire equatorial plane has been proposed.

When a pneumatic tire of this type is in use environment in which the pneumatic tire is installed in a vehicle, the behavior and alignment of a suspension and input from a road surface to the pneumatic tire are asymmetric with respect to the tire equatorial plane. As a result, regardless of whether the vehicle is going straight or cornering, the force that acts on the pneumatic tire and required functional roles to be played by the pneumatic tire are also asymmetric with respect to the tire equatorial plane. Accordingly, in the pneumatic tire, different functions are performed on a vehicle-installation-outer side and on a vehicle-installation-inner side of the pneumatic tire.

In a first conventional example of a pneumatic tire having asymmetry, a tread portion includes an upper rubber layer having low hardness and a lower rubber layer having high hardness, and the upper rubber layer gradually increases in thickness toward the vehicle-installation-outer side (see Patent Document 1). In the first conventional example, grip deterioration caused by sectional wear can be prevented, allowing improvement in the durability of the tread portion.

In a second conventional example, a tread portion includes rubber layers having different hardness, and the lower rubber layer gradually increases in thickness toward one end part either throughout the tread surface, or across at least one land portion defined by circumferential grooves (see Patent Document 2). In the second conventional example, stability in straight driving can be improved by cancelling out remaining lateral forces.

In a third conventional example, a volume fraction of a lower rubber increases toward the vehicle-installation-outer side (see Patent Document 3).
Patent Document 1: JP-A 2-162104
Patent Document 2: JP-A 11-59118
Patent Document 3: EP 1236587A2

### DISCLOSURE OF THE INVENTION

Technical background information can be derived from Wikipedia "Dynamic mechanical analysis". EP1016555 A2 discloses a pneumatic tire for an automobile having a tread portion (in a two-layered structure of a cap tread layer and an under tread layer).

The tires in the first and third conventional examples, however, cannot produce a large cornering force in cornering, and therefore cannot improve steering stability and the like. On the other hand, in the second conventional example, the cornering force in cornering can be increased as compared with the first and third conventional examples, but not to a large extent. Moreover, since vibration absorption characteristic and vibration damping performance cannot be improved, satisfactory comfortability cannot be obtained, either.

While other various pneumatic tires having asymmetry have been proposed in addition to those in the first and second conventional examples, one that satisfies both the steering stability and the comfortability (ride quality and quietness) has yet to be proposed.

The present invention has been made to solve the above problems, and has an objective to provide a pneumatic tire that satisfies both the steering stability and the comfortability (ride quality and quietness).

The present invention is as defined in claim 1.

The vehicle-installation-outer side in the tread portion has a high total storage elastic modulus, which is determined by all the layers, and therefore has a so-called hard rubber structure. Accordingly, in cornering, a large cornering force can be produced on the outer side. In contrast, the vehicle-installation-inner side in the tread portion has a low total storage elastic modulus, which is determined by all the layers, and therefore has a so-called soft rubber structure. Accordingly, vibration absorption and damping performance of the tread portion can be improved. With the above structure, both the steering stability and the comfortability (ride quality and quietness) can be satisfied.

The installation-outer side is formed of the hard rubber layer producing a large cornering force in cornering, the installation-inner side is formed of the soft rubber layer damping input and vibrations from the road. Consequently, both the steering stability and the comfortability can be satisfied.

Other characteristic of the present invention is summarized in that the tread portion includes two layers, a base rubber layer and a cap rubber layer, the base rubber layer placed on an inner side in a tire radial direction, the cap rubber layer placed on an outer side in the tire radial direction, the base rubber layer is formed of a rubber material having a storage elastic modulus higher than that of a rubber material forming the cap rubber layer, and a thickness of the base rubber layer is set larger on the outer side in the tire width direction than on the inner side in the tire width direction.

According to the above characteristic, while the installation-outer side is formed of the hard rubber layer producing a large cornering force in cornering, the installation-inner side is formed of the soft rubber layer damping input and vibrations from the road. Consequently, both the steering stability and the comfortability can be satisfied.

Other characteristic of the present invention is summarized in that, in the tread portion, a border position is set at any selected position in the tire width direction so that the tread portion is divided into at least two sections including an outer section and an inner section, with the border position as a border, and the tread portion is formed such that the thickness of the base rubber layer varies between the sections, while being even in each of the sections.

According to the above characteristic, in accordance with the target performance of the tire, tire characteristics can be changed clearly and finely between the outer side and the inner side in the tire width direction with the border position as a border. Moreover, an extreme change in the stiffness of the tread portion can be prevented.

Other characteristic of the present invention is summarized in that, for the sections adjacent to each other with the border position as a border, the thickness of the base rubber layer in one of the sections having a large thickness is set at 120% to 300% relative to the thickness in the other section having a small thickness.

In terms of the above characteristic, comfortability improvement to be achieved by changing the thickness of the base rubber layer cannot really be expected if the thickness change of the base rubber layer from one side to the other side of the border position is less than 120%. On the other hand, the thickness change of more than 300% results in an extreme change in the stiffness of the tread portion from one side to the other side of the border position. Consequently, a handling response sharply changes according to the steering angle, leading to lower steering stability. Considering the above, when the thickness change is set in the 120% to 300% range, both the comfortability and the steering stability can be reliably satisfied.

Other characteristic of the present invention is summarized in that the border position is within a position of a groove in the tread portion.

According to the above characteristic, there is no stiffness change in the rib, making it unlikely to lead to lower steering stability and wear resistance.

The present invention can provide a pneumatic tire that satisfies both the steering stability and the comfortability (ride quality and quietness).

### BRIEF DESCRIPTION OF THE DRAWINGS

[Fig. 1] Fig. 1 is a cross-sectional view of a pneumatic tire, showing an embodiment of the present invention, and.
[Fig. 2] Fig. 2 is a cross-sectional view of a pneumatic tire showing another aspect of the present invention.
[Fig. 3] Fig. 3 is a cross-sectional view of a conventional pneumatic tire being generally used.
[Fig. 4] Fig. 4 is a chart showing structures of tires of a conventional example, examples, and comparative examples (in which the thickness of a base rubber layer varies between two sections) and showing evaluation results of performance tests for those tires.
[Fig. 5] Fig. 5 is a chart showing structures of tires of examples and comparative examples (in which the thickness of the base rubber layer changes among three sections) and showing evaluation results of performance tests for those tires.

### BEST MODE FOR CARRYING OUT THE INVENTION

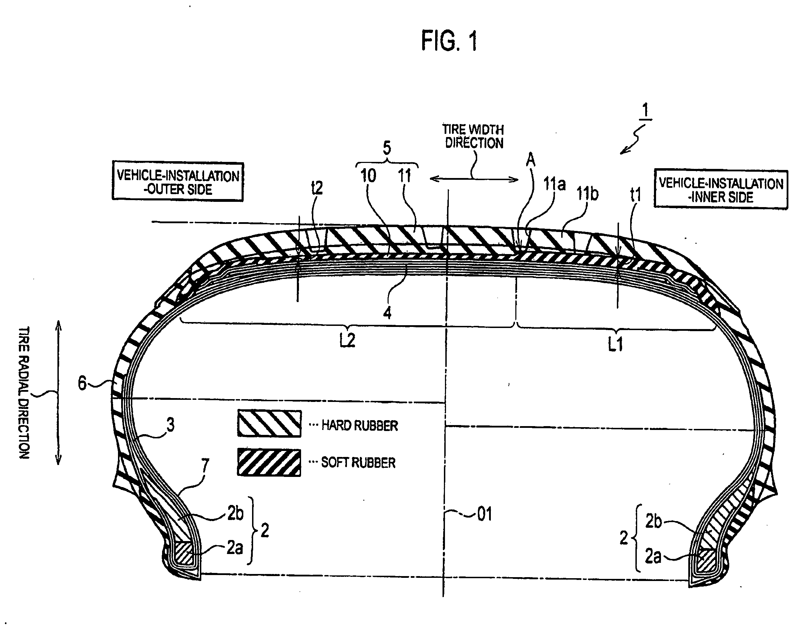

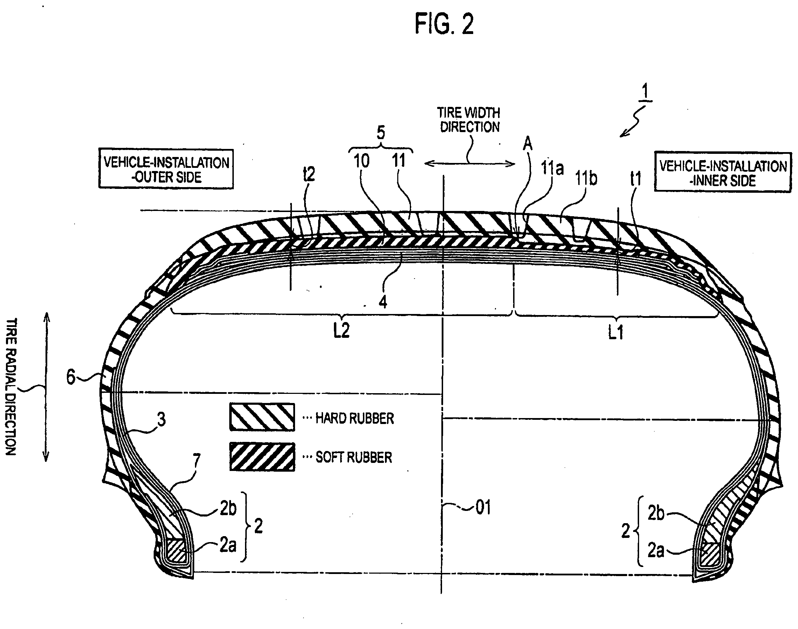

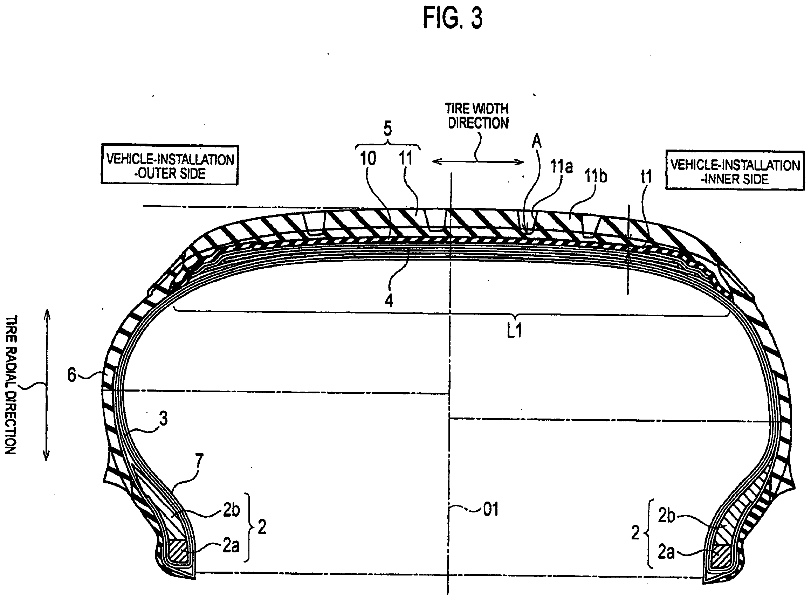

Referring to the drawings, an embodiment of the present invention will be described below. Fig. 1 is a cross-sectional view of a pneumatic tire according to an embodiment of the present invention. Fig. 2 is a cross-sectional view of a pneumatic tire showing another aspect of the present invention. Fig. 3 is a cross-sectional view of a conventional pneumatic tire being generally used. As shown in Fig. 1, in a pneumatic tire 1, an inner side and an outer side are designated for installation in a vehicle, and the pneumatic tire 1 has the following structure. Specifically, the pneumatic tire 1 includes: paired bead reinforcement portions 2 being spaced away from each other in a tire width direction and each having a bead core 2a and a bead filler 2b; a toroidal-shaped carcass 3 having its paired end parts turned back around the corresponding bead reinforcement portion 2; a belt layer 4 being placed outward of the carcass 3 in a tire radial direction; a tread portion 5 being placed outward of the belt layer 4 in the tire radial direction and coming in contact with the road; paired side wall portions 6 being placed outward of the respective side faces of the carcass 3; and a bead portion 7 covering both opening ends of the carcass 3 and being to be attached to a tire wheel (not shown).

The tread portion 5 has a double-layered structure of: a base rubber layer 10 placed on an inner side in the tire radial direction; and a cap rubber layer 11 placed on an outer side in the tire radial direction. The cap rubber layer 11 comes in direct contact with the road. At appropriate positions in an outer face side, which is the contact side, of the cap rubber layer 11, grooves 11a are formed in a circumferential direction. These multiple grooves 11a form multiple ribs 11b on the top surface side.

A material forming the base rubber layer 10 and a material forming the cap rubber layer 11 are different from each other in their storage elastic modulus. In the present embodiment, the base rubber layer 10 is formed of a rubber material having a storage elastic modulus lower than that of a rubber material forming the cap rubber layer 11. The high and low of the storage elastic modulus at 30 degrees centigrade represent so-called "hardness" and "softness" of the rubber; a rubber with a high storage elastic modulus is "hard," whereas a rubber with a low storage elastic modulus is "soft." Accordingly, in the present embodiment, the base rubber layer 10 is formed of a soft rubber material, and the cap rubber layer 11 is formed of a hard rubber material.

While the tread portion 5 is formed so that its total thickness may be substantially even (e.g., approximately 11 mm) in the tire width direction, the thicknesses of the respective base rubber layer 10 and the cap rubber layer 11 change as follows. Specifically, in the tread portion 5, a border position A is set at any selected position in the tire width direction. With the border position A as a border, the tread portion 5 has a vehicle-installation-inner section L1 where a thickness t1 of the base rubber layer 10 is set large, and a vehicle-installation-outer section L2 where a thickness t2 of the base rubber layer 10 is set small. In contrast with the base rubber layer 10, the cap rubber layer 11 has a small thickness in the inner section L1 and a large thickness in the outer section L2. The base rubber layer 10 and the cap rubber layer 11 are each formed such that the thickness within each section is almost even.

Here, the thickness t1 of the base rubber layer 10 is a distance from a surface of the belt layer 4, and the thickness of the cap rubber layer 11 is a distance from a surface of the base rubber layer 10 to a tire surface (a surface of the cap rubber layer 11).

In the present embodiment, the border position A is within the position of one of the grooves 11a in the tread portion 5.

Moreover, the thicknesses t1 and t2 of the base rubber layer 10 in the respective inner section L1 and outer section L2 adjacent to each other with the border position A in between as a border are set as follows. Specifically, the t1 in the inner section L1 having a large thickness is 120% to 300% of the t2 in the outer section L2 having a small thickness.

Note that, regarding the thicknesses of the base rubber layer 10 and the cap rubber layer 11, both the base rubber layer 10 and the cap rubber layer 11 have thickness variations in the tire width direction since vulcanization molding is carried out by pressing the cap rubber layer 11 with a mold. In the present case, the thickness of each of the base rubber layer 10 and the cap rubber layer 11 is derived by averaging the thicknesses in a predetermined section.

The pneumatic tire 1 having the above structure satisfies both the steering stability and the comfortability (ride quality and quietness) for the following reasons. Specifically, in the pneumatic tire 1 installed in a vehicle, an area on the vehicle-installation-outer side relative to a tire equatorial plane O1 plays a larger role in contributing to the steering stability than an area on the vehicle-installation-inner side thereof. A conceivable reason for this is as follows. Specifically, in a cornering behavior that determines the steering stability, the center of gravity of the vehicle shifts to an outer side during cornering. Thereby, a larger load is placed on the pneumatic tire 1 on the outer side during cornering, and more particularly, on the area on the vehicle-installation-outer side of the pneumatic tire 1. For this reason, increasing stiffness of such area and thus causing the area to produce a large cornering force is effective in improving the steering stability.

On the other hand, an area at the vehicle-installation-inner side of the tire equatorial plane O1 plays a large role in contributing to the comfortability. Currently, in almost all vehicles, a wheel to which the pneumatic tire 1 is attached has a shape having a so-called "offset" (a shift amount in a width direction between the equatorial plane of the wheel and a hub face connecting the wheel to the shaft), and the hub face is offset to the vehicle-installation-outer side. For this reason, in a wheel-tire system which is connected to the shaft with the hub face and is thereby supported by the shaft, stiffness is high in an area on the vehicle-installation-outer side close to the hub face, and stiffness is low in an area on the vehicle-installation-inner side away from the hub face. Accordingly, when the tire receives input of vibrations generated, while driving, due to dips and bumps in a road surface and obstacles on the road and the like, the area on the vehicle-installation-inner side receives the vibration more easily than the area on the outer side. Therefore, improving vibration absorption and damping performance in the area on the vehicle-installation-inner side in the pneumatic tire is effective in improving the comfortability.

In the pneumatic tire according to the present embodiment, the base rubber layer 10 is formed of a rubber material having a storage elastic modulus lower than that of a rubber material forming the cap rubber layer 11. In addition, with the border - position A as a border, the base rubber layer 10 is formed in small thickness in the outer section L2 in the tire width direction and in large thickness in the inner section L1 in the tire width direction. Accordingly, the tread portion 5 has a so-called hard rubber structure on the vehicle-installation-outer side, allowing production of a large cornering force in cornering. On the other hand, the tread portion 5 has a so-called soft rubber structure on the vehicle-installation-inner side, allowing improvement in the vibration absorption and damping performance in the tread portion 5. With the above structure, both the steering stability and the comfortability (ride quality and quietness) can be satisfied.

In the present embodiment, the base rubber layer 10 is formed of a rubber material having a storage elastic modulus lower than that of a rubber material forming the cap rubber layer 11, and the thicknesses t1 and t2 of the base rubber layer 10 are set such that the thickness on the outer side in the tire width direction is small and the thickness on the inner side in the tire width direction is large. In this manner, since the cap rubber layer 11 comes in contact with the road, forming the cap rubber layer 11 with a hard rubber material directly contributes to improvement in the steering stability. Furthermore, since the base rubber layer 10 transmits input of dips and bumps of the road and ground reaction force to the tire casing, and eventually to the shaft, forming the base rubber layer 10 with a soft rubber material is effective in improving the comfortability.

In the present embodiment, in the tread portion 5, the border position A is set at any selected position in the tire width direction. Then, the base rubber layer 10 is formed such that, with the border position A as a border, its thickness on one side is different from that on the other side. Accordingly, according to the target performance of the tire, tire characteristics can be clearly changed between the outer side and the inner side in the tire width direction, with the border position A as a border therebetween. Further, if the base rubber were formed only partially, breakage would occur at an end part of the base rubber. However, the base rubber layer 10 is formed throughout the cap rubber layer 11 in the tire width direction. Therefore, such possible situation can be prevented, and the durability of the tread portion 5 thus improves.

In the present embodiment, the border position A is set within the position of one of the grooves 11a in the tread portion 5. Accordingly, there is no stiffness change in the rib 11b, making it unlikely to lead to lower steering stability and wear resistance.

In the present embodiment, the thicknesses t1 and t2 of the base rubber layer 10 in the respective sections adjacent to each other with the border position A in between as a border are set such that the t1 in the inner section L1 having a large thickness is 120% to 300% of the t2 in the outer section L2 having a small thickness. Comfortability improvement to be achieved by changing the thickness of the base rubber layer 10 cannot really be expected if the thickness change in the base rubber layer 10 from one side to the other side of the border position A is less than 120%. On the other hand, the thickness change of more than 300% results in an extreme change in the stiffness of the tread portion 5 from one side to the other side of the border position. Consequently, a handling response sharply changes according to the steering angle, leading to lower steering stability. Considering the above, when the thickness change is set in the 120% to 300% range, both the comfortability and the steering stability can be reliably satisfied.

In the present embodiment, the base rubber layer 10 is formed of a rubber material having a storage elastic modulus lower than that of a rubber material forming the cap rubber layer 11, and is formed such that its thickness is larger on the inner side than on the outer side in the tire width direction. A conceivable modification of the embodiment is to reverse their storage elastic moduli. Specifically, in a conceivable structure of the modification, the base rubber layer 10 is formed of a rubber material having a storage elastic modulus higher than that of a rubber material forming the cap rubber layer 11, and is formed such that its thickness is larger on the outer side than on the inner side in the tire width direction. For the reasons similar to those given in the above embodiment, such a structure can also satisfy both the steering stability and the comfortability (ride quality and quietness). In terms of durability and wear resistance performance, the cap rubber, which comes in contact with the road surface, needs to have a certain level of hardness. Considering such constraints, the comfortability can be improved more by making the cap rubber hard and the base rubber soft.

In the present embodiment, there is a single border position A to divide the tread portion 5 into the two sections L1 and L2. Alternatively, there may be two or more border positions A to divide the tread portion 5 into three or more sections. Then, the thickness of the base rubber layer 10 may change in three or more stages from the outer side to the inner side. Even in the case where the tread portion 5 is divided into three or more sections, in the sections adjacent to each other with the border position A in between as a border, the thickness of the base rubber layer 10 in the thick section is set 120% to 300% of that in the thin section.

With such a structure, according to the target performance of the pneumatic tire, tire characteristics can be changed finely in the tire width direction. In addition, an extreme change in the stiffness of the tread portion 5 can be prevented.

In the pneumatic tire 1 shown in Fig. 2, the base rubber layer 10 is formed of a rubber material having a storage elastic modulus higher than that of a rubber material forming the cap rubber layer 11, and is formed in large thickness in the outer section L2 in the tire width direction and in small thickness in the inner section L1 in the tire width direction, with the border position A as a border. Accordingly, the vehicle-installation-outer side in the tread portion 5 has a so-called hard rubber structure. Thus, as in the above embodiment, the outer side can produce a large cornering force in cornering. Further, the vehicle-installation-inner side in the tread portion 5 has a so-called soft rubber structure. Thus, vibration absorption and damping performance of the tread portion 5 can be improved. With the above structure, both the steering stability and the comfortability (ride quality and quietness) can be satisfied.

### <Example>

Next, a description will be given of comparison experiments conducted to demonstrate the effects of the pneumatic tire of the present invention. Tires used for the experiments were tires of Examples 1 to 4 formed according to the above embodiment, a tire of Conventional Example, and tires of Comparative Examples 1 to 5. Each tire has a size of 225/55R17, a rim size of 7.5J×17, and a tire internal pressure of 220kPa. The vehicle used for the tests was Toyota' s Celsior (registered trademark), and the tests were conducted with two passengers in the vehicle.

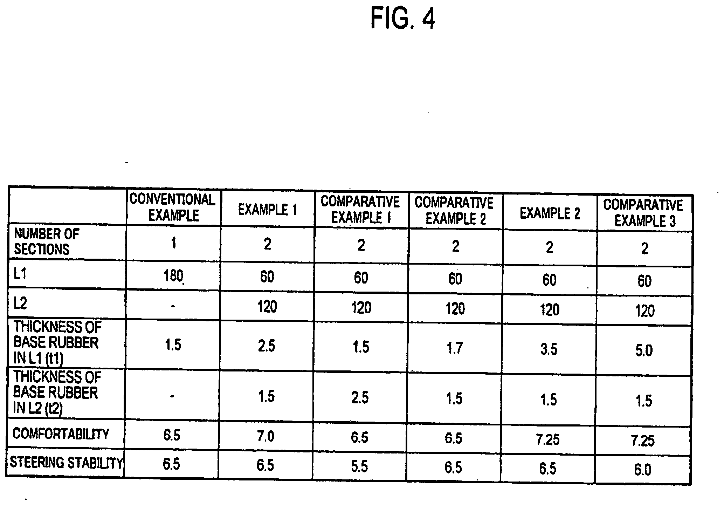

As shown in Fig. 4, in the tire of Conventional Example, a tread portion has two layers of rubber, and the cap rubber and the base rubber each have an even thickness throughout the tread. In the tires of Examples 1 and 2 and the tires of Comparative Examples 1 to 3, a tread portion has two layers of rubber, and the tread portion is divided into two sections: the inner section L1 and the outer section L2. The thicknesses t1 and t2 of the base rubber layer in the respective sections are different from each other. In the tires of Examples 1 and 2, the thickness of the base rubber layer in the inner section L1 is 120% to 300% of that in the outer section L2. In the tires of Comparative Examples 1 to 3, the thickness of the base rubber layer in the inner section L1 is not 120% to 300% of that in the outer section L2.

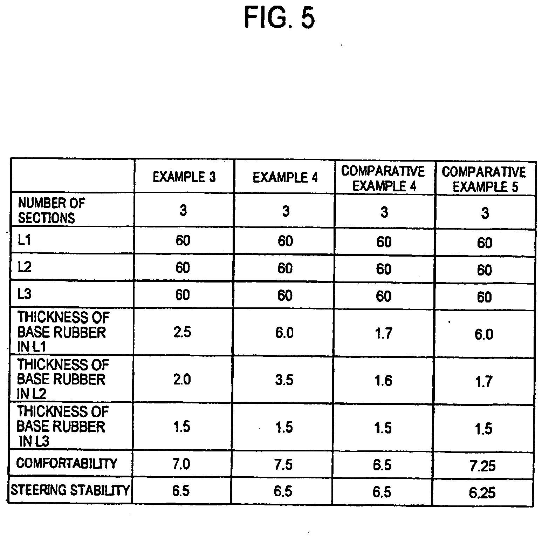

As shown in Fig. 5, in the tires of Examples 3 and 4 and the tires of Comparative Examples 4 and 5, a tread portion has two layers of rubber. In addition, the tread portion is divided into three sections: the inner section L1, the middle section L2 and the outer section L3, and the thicknesses of the base rubber layer in the respective sections are different from one another. In the tires of Examples 3 and 4, the thickness of the base rubber layer in the middle section L2 is 120% to 300% of that in the outer section L3, and the thickness of the base rubber layer in the inner section 1 is 120% to 300% of that in the middle section L2. In the tires of Comparative Examples 4 and 5, the thickness of the base rubber layer in the middle section L2 is not 120% to 300% of that in the outer section L3, and the thickness of the base rubber layer in the inner section 1 is not 120% to 300% of that in the middle section L2.

(1) The comfortability was evaluated as follows. Specifically, using each type of tires under the above conditions, a driver actually drove the vehicle on a test track at a low speed to about 100 km/h, which is a speed range that a general driver experiences on highways. Then, based on the feeling, the driver evaluated the ride quality and the in-vehicle noise on a scale of one to ten. Here, the test track included a round track having a long straight part and a track with many curves for handing evaluation.
(2) The steering stability was evaluated as follows. Specifically, using each type of tires under the above conditions, a driver actually drove the vehicle on a test track at a low speed to about 100 km/h, which is a speed range that a general driver experiences on highways. Then, based on the feeling, the driver evaluated the steering stability on a dry road surface on a scale of one to ten. Here, the test track included a round track having a long straight part and a track with many curves for handing evaluation.

As seen from the experiment results shown in Figs. 4 and 5, it was demonstrated that, compared to the tire of Conventional Example, the tires of Examples have the steering stability of an equal level, but have a better comfortability.

As described above, contents of the present invention have been disclosed using the embodiment of the present invention; however, it should be understood that the present invention is defined only by the claims

### INDUSTRIAL APPLICABILITY

As described above, the pneumatic tire according to the present invention can satisfy both the steering stability and the comfortability (ride quality and quietness), and therefore is useful.

## Claims

1. A pneumatic tire (1) in which: an outer side and an inner side are designated for installation on a vehicle; a tread portion (5) is formed by stacking at least two layers (10, 11); and the two layers (10,11) constituting the tread portion (5) are respectively made of rubber materials different in storage elastic modulus, wherein
a ratio of thicknesses of the respective two layers (10, 11) constituting the tread portion (5) is different between the outer side and the inner side in a tire width direction,
a total storage elastic modulus determined by all the layers constituting the tread portion (5) is set higher on the outer side in the tire width direction than on the inner side in the tire width direction,
the tread portion (5) includes two layers, a base rubber layer (10) and a cap rubber layer (11), the base rubber layer (10) being placed on an inner side in a tire radial direction, the cap rubber layer (11) being placed on an outer side in the tire radial direction,
the base rubber layer (10) is formed of a rubber material having a storage elastic modulus lower than that of a rubber material forming the cap rubber layer (11), and **characterized in that**
a thickness of the base rubber layer (10) is set smaller on the outer side in the tire width direction than on the inner side in the tire width direction and
in the tread portion, a border position A is set at any selected position in the tire width direction so that the tread portion (5) is divided into at least two sections (L₁, L₂) including an outer section (L₂) and an inner section (L₁), with the border position A as a border, and
the tread portion (5) is formed such that the thickness of the base rubber layer (10) varies between the sections (L₁, L₂), while being even in each of the sections (L₁, L₂).

2. The pneumatic tire according to claim 1, wherein for the sections (L₁, L₂) adjacent to each other with the border position A as a border, the thickness of the base rubber layer (10) in one of the sections (L₁, L₂) having a large thickness is set at 120% to 300% relative to the thickness in the other section (L₂, L₁) having a small thickness.

3. The pneumatic tire according to claim 2, wherein the border position A is within a position of a groove in the tread portion.

## Patentansprüche

1. Luftreifen (1), bei dem: eine Außenseite und eine Innenseite für eine Montage auf ein Fahrzeug bestimmt sind; ein Laufflächenabschnitt (5) durch Stapeln von mindestens zwei Lagen (10, 11) gebildet wird; und die zwei Lagen (10, 11), die den Laufflächenabschnitt (5) bilden, jeweils aus Gummimaterialien hergestellt sind, die hinsichtlich ihres Lagerungselastizitätsmoduls unterschiedlich sind, wobei
ein Verhältnis der Dicken der jeweiligen zwei Lagen (10, 11), die den Laufflächenabschnitt (5) bilden, zwischen der Außenseite und der Innenseite in einer Breitenrichtung des Reifens unterschiedlich ist;
ein gesamter Lagerungselastizitätsmodul, der durch alle Lagen bestimmt wird, die den Laufflächenabschnitt (5) bilden, auf der Außenseite in der Breitenrichtung des Reifens höher eingestellt ist als auf der Innenseite in der Breitenrichtung des Reifens;
der Laufflächenabschnitt (5) zwei Lagen umfasst, eine Basisgummilage (10) und eine Kappengummilage (11), wobei die Basisgummilage (10) auf einer Innenseite in einer radialen Richtung des Reifens angeordnet ist, wobei die Kappengummilage (11) auf einer Außenseite in der radialen Richtung des Reifens angeordnet ist;
die Basisgummilage (10) aus einem Gummimaterial mit einem Lagerungselastizitätsmodul gebildet wird, der niedriger ist als der eines Gummimaterials, das die Kappengummilage (11) bildet; und **dadurch gekennzeichnet, dass**
eine Dicke der Basisgummilage (10) auf der Außenseite in der Breitenrichtung des Reifens kleiner eingestellt wird als auf der Innenseite in der Breitenrichtung des Reifens; und
im Laufflächenabschnitt eine Grenzposition A in irgendeiner ausgewählten Position in der Breitenrichtung des Reifens eingestellt ist, so dass der Laufflächenabschnitt (5) in mindestens zwei Abschnitte (L₁ und L₂) unterteilt wird, einschließlich eines äußeren Abschnittes (L₂) und eines inneren Abschnittes (L₁) mit der Grenzposition A als eine Begrenzung, und
der Laufflächenabschnitt (5) so ausgebildet ist, dass die Dicke der Basisgummilage (10) zwischen den Abschnitten (L₁, L₂) variiert, während sie in einem jeden der Abschnitte (L₁, L₂) gleichmäßig ist.

2. Luftreifen nach Anspruch 1, bei dem für die Abschnitte (L₁, L₂) benachbart zueinander mit der Grenzposition A als eine Begrenzung, die Dicke der Basisgummilage (10) in einem der Abschnitte (L₁, L₂) mit einer großen Dicke auf 120 % bis 300 % relativ zur Dicke im anderen Abschnitt (L₂, L₁) mit einer kleinen Dicke eingestellt wird.

3. Luftreifen nach Anspruch 2, bei dem die Grenzposition A innerhalb einer Position einer Rille im Laufflächenabschnitt liegt.

## Revendications

1. Bandage pneumatique (1), dans lequel : un côté externe et un côté interne sont conçus en vue d'une installation sur un véhicule ; une partie de bande de roulement (5) est formée en empilant au moins deux couches (10, 11), et les deux couches (10, 11) constituant la partie de bande de roulement (5) étant respectivement composées de matériaux de gomme présentant un module d'élasticité au stockage différent, dans lequel :
un rapport entre les épaisseurs des deux couches respectives (10, 11) constituant la partie de bande de roulement (5) est différent entre le côté externe et le côté interne, dans une direction de la largeur du bandage pneumatique ;
un module d'élasticité au stockage total déterminé par toutes les couches constituant la partie de bande de roulement (5) est ajusté de sorte à être plus élevé sur le côté externe, dans la direction de la largeur du bandage pneumatique, que sur le côté interne, dans la direction de la largeur du bandage pneumatique ;
la partie de bande de roulement (5) englobe deux couches, une couche de gomme de base (10) et une couche de gomme de chape (11), la couche de gomme de base (10) étant placée sur un côté interne dans une direction radiale du bandage pneumatique, la couche de gomme de chape (11) étant placée sur un côté externe dans la direction radiale du bandage pneumatique ;
la couche de gomme de base (10) est formée à partir d'un matériau de gomme présentant un module d'élasticité au stockage inférieur à celui d'un matériau de gomme constituant la couche de gomme de chape (11) ; et
**caractérisé en ce qu'**une épaisseur de la couche de gomme de base (10) est ajustée de sorte à être inférieure sur le côté externe, dans la direction de la largeur du bandage pneumatique, à celle sur le côté interne dans la direction de la largeur du bandage pneumatique et
dans la partie de bande de roulement (5), une position de bordure A est ajustée au niveau d'une quelconque position sélectionnée dans la direction de la largeur du bandage pneumatique, de sorte que la partie de bande de roulement (5) est divisée en au moins deux sections (L₁ et L₂), englobant une section externe (L₂) et une section interne (L₁), la position de bordure A servant de bordure ; et
la partie de bande de roulement (5) est formée de sorte que l'épaisseur de la couche de gomme de base (10) change entre les sections (L₁, L₂), tout en étant égale dans chacune des sections (L₁, L₂).

2. Bandage pneumatique selon la revendication 1, dans lequel, pour les sections (L₁, L₂) adjacentes l'une à l'autre, la position de bordure A servant de bordure, l'épaisseur de la couche de gomme de base (10) dans l'une des sections (L₁, L₂) ayant une grande épaisseur, est ajustée de sorte à représenter entre 120% à 300% par rapport à l'épaisseur dans l'autre section (L₁, L₂) ayant une épaisseur réduite.

3. Bandage pneumatique selon la revendication 2, dans lequel la position de bordure A se situe dans une position d'une rainure dans la partie de bande de roulement.
